# EUROPEAN PATENT SPECIFICATION

(11) **EP 2 273 034 B1**
(45) Date of publication and mention of the grant of the patent: **19.11.2014**
(21) Application number: 10165421.8
(22) Date of filing: 09.06.2010
(51) Int. Cl.: E04F 11/025, E04F 11/108, F16B 12/14, F16B 5/02, F16B 37/12

(54) **Arrangment and method for mounting a tread at a stringer of a wooden staircase**
Vorrichtung und Verfahren zur Befestigung einer Stufe mit dem Holm einer Holztreppe
Dispositif et procédé pour fixer une marche à un limon d'escalier en bois

(30) Priority: 12.06.2009 SE 0950452
(43) Date of publication of application: 12.01.2011
(73) Proprietor: Trätrappor Norsjö AB, 935 32 Norsjö (SE)
(72) Inventor: Stenman, Jan, 935 31 Norsjö (SE)
(74) Representative: Zacco Sweden AB

(56) References cited:
- EP-A1- 0 489 251
- AT-U1- 5 471
- DE-U1- 9 213 392
- FR-A1- 2 400 090
- FR-A1- 2 686 361

## Description

The present invention concerns a mounting arrangement for the mounting of a stair onto a stringer for a wooden staircase according to the introduction to claim 1.

Wooden staircases are often mounted through a number of treads being placed between stringers, after which screws are screwed in from the rear surface of the stringer, through the stringer and into a part of the tread that faces to the side. This is a simple and elegant solution, but it is associated with disadvantages. One disadvantage is that the treads must be screwed in place before the staircase is mounted in place in the space in which it is intended that the staircase be placed, and this involves heavy lifting operations. A second disadvantage is that the mounting screws are located inaccessibly against a wall once the staircase has been placed into the space, and the possibility of post-mounting tightening of the treads for this reason disappears. A further disadvantage is that a pre-assembled staircase is bulky, and problems therefore arise in spaces that have small or constricted passages, see for example EP 0 489 251 A1.

There is, therefore, a requirement for a mounting arrangement that allows the possibility of mounting a staircase one piece at a time, which means that heavy lifting is avoided and that the cost of mounting will be lower, since fewer mounting personnel will be required.

The aim of the present invention is thus to remove the disadvantages described above.

This aim is achieved with a mounting arrangement for the mounting of a tread onto a stringer, where the mounting arrangement demonstrates the properties and characteristics specified in the patent claims.

The present invention will be described below with reference to the attached drawings, of which
Figure 1 shows a view of a staircase,
Figure 2 shows a view of a stringer,
Figure 3 shows a view of a curved stringer,
Figure 4 shows a plan view of a curved staircase,
Figure 5 shows views of a tread and a riser,
Figures 6 - 8 show a mounting arrangement,
Figure 9 shows a cross-sectional view of a tread and a stringer, and
Figures 10 - 11 show the part of a tread that faces to the side.

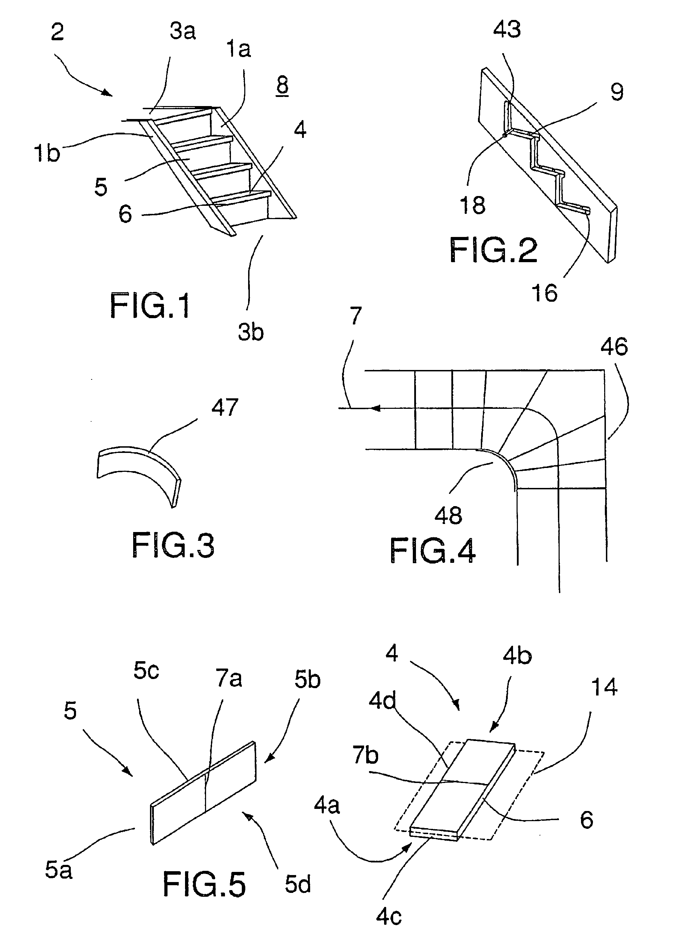

By definition, and with reference to Figures 1-5, the term "stringer" 1a, 1b is here used to denote that part of a staircase 2 that runs between two storeys 3a, 3b along the extent of the staircase and with a gradient that allows a natural step height. The term "tread" 4 is here used to denote that part onto which the user places the foot when using the staircase 2, and the term "riser" 5 is here used to denote that part that is located in association with a forward edge 6 of the side 4a of the tread 4 that faces the floor A, the riser constituting a limitation on the depth of the tread 4. The term "centre line" 7 of the staircase 2 is used to denote a putative line at the centre of the width of the treads.

The wooden staircase 2 shown in Figure 1 comprises a stringer 1a that is mounted at a wall 8, by means of, for example, screws or with the aid of other fixture means. The stringer 1 may be arranged with a number of holes 9 located at a distance from each other, and it is an advantage if these are blind holes. The term "blind hole" is here used to denote a hole that does not go all the way, i.e. it does not extend through the complete thickness of the stringer 1. The stringer 1 may extend along the complete length of the staircase 2, for example between two storeys 3a, 3b. The space into which the staircase 2 is to be placed may also be curved, whereby several stringers are arranged after each other, with a pre-determined angle between each other in order to follow the form of the space. The staircase may also be located as a free-standing staircase, whereby the stringers are arranged one after the other with a pre-determined angle between them in order to follow the planned form of the staircase.

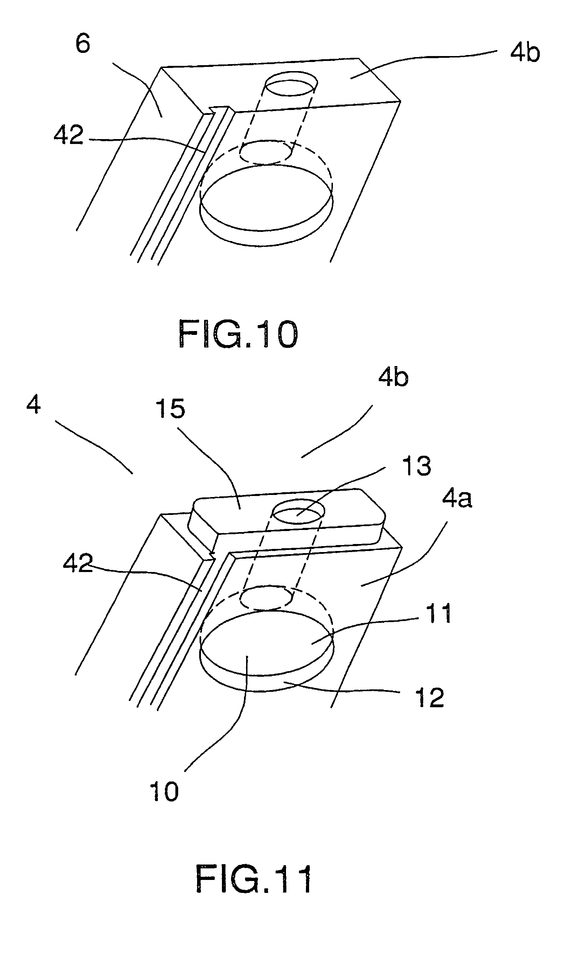

The staircase 2 further comprises a number of treads. A tread 4 is shown from below in Figures 10 and 11, i.e. seen from the side 4a that faces the floor. A rebate 10 with a bottom 11 is located in association with one part 4b of the tread that faces to the side, the side that is intended to be directed towards the stringer 1a, 1b. The rebate 10 extends a certain distance into the tread 4, and it is an advantage if it passes beyond the central plane 14 of the tread. Thus the material in the tread forms a wall 12 around the bottom 11 of the rebate 10. A hole 13 is located at the rebate 10, which hole extends through the wall 12 of the rebate 10, generally parallel with the central plane 14 of the tread 4, and out through the part 4b of the tread that faces to the side. The part 4b of the tread that faces to the side may be milled as is shown in Figure 11 in such a manner that the side section creates the form of a protrusion 15 intended to be introduced into a horizontal rebate 16 in the stringer 1a, 1b. It is an advantage that the holes 9 be located in the rebates 16 of the stringer as shown in Figure 2.

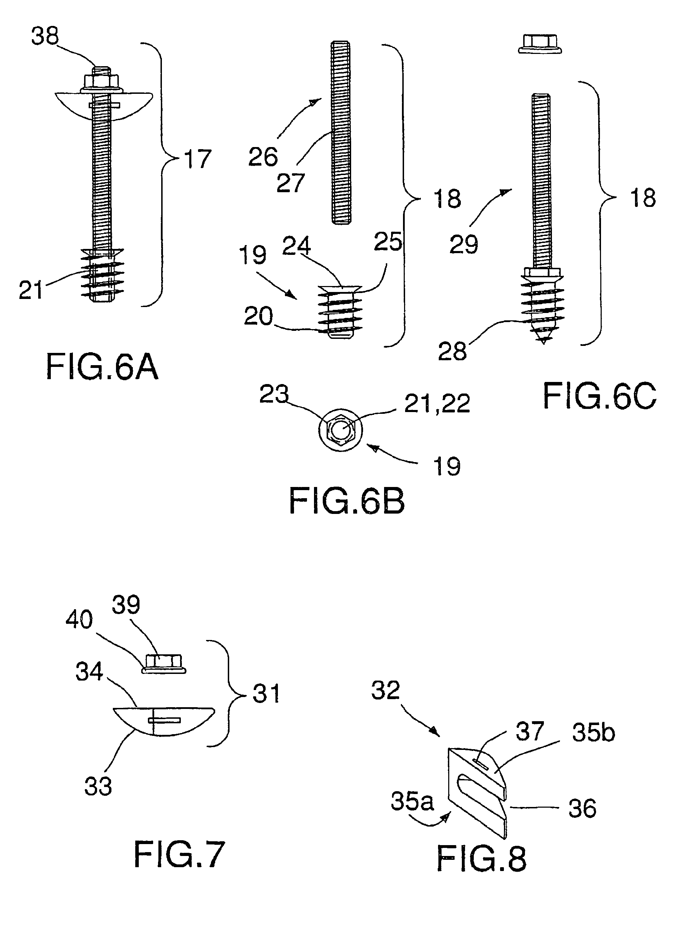

Figures 6-9 show a mounting arrangement 17 according to the invention. The arrangement shown in Figure 6A comprises a first assembly part 18 that is intended to be fixed in the stringer. The first assembly part 18 comprises, as shown in Figure 6B, a part 19, and it is advantageous that this part have the form of a cylinder, with a diameter that is equal to or greater than the hole 9 in the stringer, and it is also an advantage that this part be provided with a part 20 that has an external thread. It is further arranged to have a penetrating central hole 21 with a part 22 that has an internal thread, as shown in Figure 7. The threaded part is designed to have a thread block, at a certain distance along the cylindrical part. A rebate is located at one of its ends, which rebate has the form of a keyed grip 23 for a tool, such as, for example, a hexagonal key or similar.

The first assembly part 18 further comprises an extension piece 26. The internal thread 22 of the cylindrical part 19 of the first assembly part is intended to receive the extension piece 26. It is an advantage that this extension piece comprise a threaded rod that is threaded in towards the thread block. The extension piece is provided with threads 27 along the major part of its length. A wedge-shaped outwardly facing flange 24 is arranged at the transition between the cylindrical part 19 and the extension piece 26. It is an advantage that the flange 24 coincide with the peripheral edge 25 of the cylindrical part 19. The threads 20, 27 of the first assembly piece 18 may be divided into two parts, with different designs.

The first assembly piece may, in a second embodiment that is shown in Figure 6C, be arranged with an externally threaded part designed in such a manner that the first assembly piece is self-drilling, as is shown in the drawing. The first assembly piece 18 in this case is designed as an extended rod with a threaded tip at one end, such that it can be screwed into the stringer 1 according to directions that have been arranged in advance. It is an advantage that the externally threaded section be of wood-screw type 28, while the part 29 that is not screwed into the stringer have a thread 27 of machine-screw type. An external keyed grip for a spanner is arranged at the transition between the different types of thread.

Furthermore, the mounting arrangement 17 comprises a second assembly piece 31, shown in Figure 7. The second assembly piece 31 comprises a disk 32 that is shown in Figure 8, having the form of a segment of a cylinder with a cross-section that corresponds to a half-moon. The bowed surface 33 of the disk is intended to make contact with the wall 12 of the rebate 10 of the tread, with the place surface 34 of the disk facing away from the wall 12 of the rebate 10. A penetrating groove 36 is located in the disk 32, which groove extends between the surfaces 33, 34 essentially parallel with the end parts 35a, 35b of the segment of a cylinder, in which track 36 it is intended that the extension piece 26 be placed. The disk 32 is placed in its intended position through the disk being placed in the rebate 10 with one of its end parts 35a facing the bottom 11 of the rebate with the bowed surface 33 of the disk facing the wall 11 of the rebate, and with its plane surface 34 essentially parallel with the extension piece 26. The disk is subsequently turned into place, with the bowed surface 33 following the wall 11 of the rebate, such that the extension piece 26 becomes located in the groove 36. It is an advantage that the turning operation be carried out with a tool that is introduced into a tool holder, and it is an advantage that this tool holder be located in both end parts 35a and 35b of the disk.

Finally, the second assembly piece 31 comprises a lock arrangement 39, in the form of, for example, a nut, that is intended to be mounted onto the extension piece 26. The lock arrangement 39 has a size that is less than the hole 13 that is located between the rebate 10 and the part 4b of the tread that faces to the side. A washer 40, advantageously a sprung washer, is located between the lock arrangement 39 and the disk 32. It is an advantage that the washer 40 be located on the lock arrangement 39 in a manner such that it can be rotated, forming one unit.

Mounting of the staircase proceeds as follows: the first assembly piece 18 is fixed into the stringer 1 by a suitable method, for example by screwing it into the stringer 1 using a tool. If this first assembly piece 18 has been given another form than cylindrical, the assembly piece is fixed by another suitable method, for example by gluing. The flange 24 thus presses back the wood fibres that have been pressed out from the stringer 1 when the first assembly piece 18 is fixed into the stringer 1. The first assembly piece 18 is fixed in the stringer 1 such that the external thread 20 of the assembly piece 18 is located fully within the stringer 1. If the first assembly piece 18 comprises a cylindrical part 19 and an extension piece 26, the extension piece is introduced into the central hole 21 in the cylindrical piece 19, and screwed such that it comes to be fixed against the thread block of this piece. The lock arrangement 39 with the sprung washer 40 is subsequently screwed onto the extension piece 26, for example such that the lock arrangement 39 covers the free end 38 of the extension piece 26.

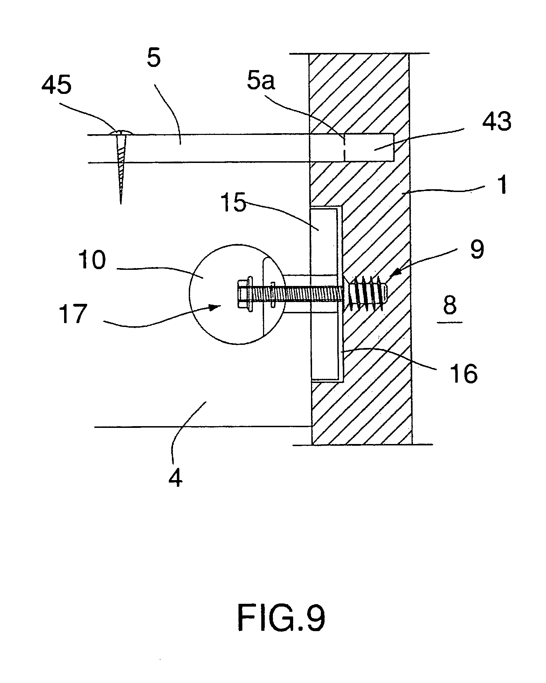

With the extension piece 26 protruding in this manner from the stringer 1, the tread 4 with its holes 13 is now passed over the extension piece 26 and the lock arrangement 39, 40 such that the part 4b of the tread 4 that faces to the side is placed in contact with the stringer 1. The extension piece protrudes in this manner out into the rebate 10, with the lock arrangement 39 accessible from the side 4a of the tread 4 that faces the floor. The disk 32 is placed into the rebate 10 and it is turned with its groove 36 over the extension piece 26, after which the lock arrangement 39 accompanied by the sprung washer 40 is screwed against the plane surface 34 of the disk 32, whereby the tread 4 is held in tension against the stringer 1 as shown in Figure 9.

A second stringer 1b is subsequently prepared. The first assembly piece 18 is mounted in the same way as that used for the first stringer 1a and the lock arrangement 39 is mounted onto the extension piece 26, after which the stringer 1b is manoeuvred against the second part 4c of the tread that faces to the side such that the extension piece 26 protrudes out into the rebate 10 in the second part 4c of the tread 4 that faces to the side, i.e. the part that faces to the side that is diametrically opposed to the side part 4b previously described. The tread 4 is subsequently fixed to the opposing stringer 1b. When the tread has been fixed against the stringers, a covering plug is placed into the rebate 10 in order to conceal the assembly pieces 18, 31. It should in this case be realised that an arrangement according to the description given above allows the possibility of post-mounting tightening of the lock arrangement 39 of the second assembly piece, if this is necessary. The cover plugs that cover the rebate 10 are removed and a suitable tool is inserted into the rebate, after which the lock arrangement is tightened. The plug is subsequently replaced.

In those cases in which a closed staircase is to be mounted, in contrast to an open staircase, the side 4a of the tread that faces the floor is arranged to have a groove 42 located in the longitudinal direction of the tread 4, as can be seen in Figures 10 and 11. This groove 42 is located in association with the forward edge 6 of the tread 4 and is intended to receive a riser 5, having been given a form that corresponds to the cross-sectional form of the riser 5. A further rebate 43, with the same form, is located in the stringer 1 essentially vertical and coinciding with the end of the horizontal rebate 16 that has been described above. When the tread 4 has been mounted at the stringer, a riser 5 is introduced into the groove 42 in the tread, and it is displaced towards the stringer 1 into the vertical rebate 43 of the stringer. The vertical rebate has, as is shown in Figure 9, a depth that allows the riser 5 to be introduced sufficiently far that the centre line 7a of the riser 5 is displaced past the centre line 7b of the tread. The riser is subsequently temporarily fixed through at least one screw being drawn in from the rear edge 5d of the riser into the rear edge 4d of the tread. The mounting of the second stringer is made easier by the displacement of the riser. When the second stringer has subsequently been mounted and the treads are fixed to the stringers, the temporary screw is removed. When this has been removed, the riser 5 is displaced backwards such that its centre line 7a coincides with the centre line 7b of the tread, after which the riser is fixed by screwing with at least one screw. The length of the riser is thus adapted such that both of its parts 5a, 5b are located inside the vertical rebates in the relevant stringer when the centre lines coincide.

The mounting has been described in the description above based on one tread. It should be realised that the same mounting arrangement and method can be used for a staircase with several treads, and for curved staircases.

In order to facilitate the assembly of a stringer 47 at the inner curve 48 of a curved staircase, as shown in Figure 4, the mounting takes place as follows: when the treads have been mounted at the outer stringer 46 following the method described above, the inner stringer 47 is manoeuvred against the parts of the treads that face to the side such that the protrusions are inserted into the rebates. A first assembly piece 18 is introduced into each of the rebates 10 through the holes 13 in each tread and are fixed at the stringer, the disk 32 is mounted onto the extension piece 26 and the lock arrangement 39 is screwed tight. If the staircase is closed, the screw that holds the mounted riser is loosened, the riser is manoeuvred such that the centre lines coincide, and it is then fixed by screwing to the tread.

The present invention is not limited to what has been described above and shown in the drawings: it can be changed and modified within the scope of the innovative concept defined by the attached patent claims.

## Claims

1. A mounting arrangement (17) for the mounting of a tread (4) at a stringer (1) of a wooden staircase (2), comprising a first assembly piece (18) provided with means (20) for its fixture at the stringer (1) and with a part (26) that can be introduced into an hole (13) in a part (4b, 4c) of the tread that faces to the side, a second assembly piece (31) that can be mounted on the first assembly piece (18) and that can support the tread (4) in a manner that retains it in place, and that can be accessed through a rebate (10) arranged in the side (4a) of the tread that faces the floor, and whereby the second assembly piece (31) comprises a lock arrangement (39), and that the lock arrangement (39) has a size that is less than the hole (13) such that the lock arrangement (39) is adapted to pass through the hole (13).

2. The mounting arrangement according to claim 1, whereby the first assembly piece (18) comprises a cylindrical part (19) intended to be fixed at the stringer (1), together with an extension piece (26) that is intended to be fixed in the cylindrical part (19) and which can be accessed through a rebate (10) in the tread (4).

3. The mounting arrangement according to 2 whereby the first assembly piece (18) comprises a flange (24) formed at the transition between the cylindrical part (19) and the extension piece (26).

4. The mounting arrangement according to claim 1, whereby the first assembly piece (18) comprises a part (20) with an external thread.

5. The mounting arrangement according to claim 1, whereby the first assembly piece (18) comprises a keyed grip (23) for a tool for screwing the first assembly piece (18) into the stringer (1).

6. The mounting arrangement according to claim 2, whereby the cylindrical part (19) comprises a part (22) with an internal thread for screwing the extension piece (26) into the cylindrical part.

7. The mounting arrangement according to claim 6, whereby the extension piece (26) comprises a threaded pin bolt.

8. The mounting arrangement according to claim 1, whereby the second assembly piece (31) comprises a disk (32) provided with a penetrating groove (36).

9. The mounting arrangement according to claim 8, whereby the disk (32) has the form of a segment of a cylinder with a curved surface (33) and a plane surface (34), and in that the groove (36) extends essentially parallel the side parts (35a, 35b) of the segment.

10. The mounting arrangement according to claim 1, whereby the second assembly piece (31) comprises the lock arrangement (39) and a sprung washer (40).

11. The mounting arrangement according to claim 10, whereby the sprung washer (40) is mounted at the lock arrangement (39) in a manner that allows rotation.

12. A tread (4) adapted to be mounted by a mounting arrangement (17) according to claim 1, **characterised in that** the tread (4) comprises a rebate (10) located in the side (4a) of the tread that faces the floor in association with the part (4b) of the tread that faces the side, and a hole (13) that extends from the said rebate (10) to the part (4b) of the tread that faces to the side, wherein the hole (13) has a size that is larger than the lock arrangement (39).

13. The tread according to claim 12, whereby the tread (4) comprises a groove (42) in the side (4a) that faces the floor with a form that corresponds to the cross-sectional form of the edge of a riser (5).

14. A method for the mounting of a tread (4) at a stringer (1) in a wooden staircase (2) with at least one mounting arrangement (17) according to claim 1, where the mounting method comprises the mounting stages:
that the first assembly piece (18) is fixed to the stringer (1),
that the lock arrangement (39) and a sprung washer (40) of the second assembly piece (31) are mounted at the first assembly piece,
that the tread (4) with the hole (13) is passed over the first assembly piece (18) having the lock arrangement (39) and the sprung washer (40) mounted to it, which are introduced into the hole (13) and the tread is displaced in an axial direction such that the part (4b) of the tread that faces to the side makes contact with the stringer (1),
that a disk (32) of the second assembly piece (31) is turned such that the extension piece (26) is located in a groove (36) of the second assembly piece (31), and
that the lock arrangement (39, 40) is fixed to the disk (32) by screwing.

15. A method for the mounting of a tread (4) at a stringer (1) in a wooden staircase (2) with at least one mounting arrangement (17) according to claim 1, where the mounting method comprises the mounting stages:
that the first assembly piece (18) is fixed to the stringer (1),
that the lock arrangement (39) and a sprung washer (40) of the second assembly piece (31) are mounted at the first assembly piece,
that the tread (4) with the hole (13) is passed over the first assembly piece (18) which is introduced into the hole (13) and the tread is displaced in an axial direction such that part (4b) of the tread that faces to the side is inserted into an essentially horizontal rebate (16) formed in the stringer (1) with a form that corresponds to the cross-sectional form of the tread,
that a disk (32) of the second assembly piece (31) is turned such that the extension piece (26) is located in a groove (36) of the second assembly piece (31), and
that the lock arrangement (39, 40) is fixed to the disk (32) by screwing.

16. The method according to any one of claims 14-15, further comprising the mounting stages:
that a first part (5a) of a riser (5) that faces to the side is introduced into an essentially vertical groove (43) formed in the stringer (1) with a form that corresponds to the cross-sectional form of the riser to a position at which a central line (7a) of the riser has passed a central line (7b) of the tread,
that a second part (5c) of the riser is introduced into a groove (42) formed in the side (4a) of the tread that faces the floor.

17. The method according to claim 16, further comprising the stages:
that a second stringer (1 b) is arranged with a first assembly piece,
that the second stringer (1b) is manoeuvred in a direction towards the second part (4c) of the tread that faces the side with the extension piece (26) into the hole (13) in the second part (4c) of the tread that faces to the side,
that the second assembly piece (31) is mounted in the rebate (10) of the tread on the extension piece,
that the lock arrangement (39) is tightened onto the disk (32),
that the risers (5) are drawn outwards a certain distance from the first stringer (1a) and manoeuvred with their second parts (5b) that face to the side into a rebate in the second stringer,
that a screw (45) is passed in through the riser (5) into the rear edge (4d) of the tread, and
that a covering plug is inserted into the rebate of the tread such that the mounting arrangement (17) is thus concealed.

## Patentansprüche

1. Befestigungsvorrichtung (17) zum Befestigen einer Stufe (4) an einem Holm (1) einer Holztreppe (2), umfassend ein erstes Montagestück (18), das mit Mitteln (20) zu seiner Fixierung am Holm (1) und mit einem Teil (26) versehen ist, der in ein Loch (13) in einem Teil (4b, 4c) der Stufe, welcher der Seite zugewandt ist, einführbar ist, ein zweites Montagestück (31), das am ersten Montagestück (18) befestigbar ist, und das die Stufe (4) derart abstützen kann, dass sie in einer Stellung gehalten wird, und das durch einen Falz (10) zugänglich ist, der in der Seite (4a) der Stufe angeordnet ist, die dem Fußboden zugewandt ist, und wobei das zweite Montagestück (31) eine Verriegelungsvorrichtung (39) umfasst, und dass die Verriegelungsvorrichtung (39) eine Größe aufweist, die kleiner als das Loch (13) ist, so dass die Verriegelungsvorrichtung (39) zum Hindurchgehen durch das Loch (13) ausgebildet ist.

2. Befestigungsvorrichtung nach Anspruch 1, wobei das erste Montagestück (18) einen zylindrischen Teil (19) umfasst, der dafür vorgesehen ist, am Holm (1) zusammen mit einem Verlängerungsstück (26) fixiert zu werden, das dafür vorgesehen ist, im zylindrischen Teil (19) fixiert zu werden, und das durch einen Falz (10) in der Stufe (4) zugänglich ist.

3. Befestigungsvorrichtung nach Anspruch 2, wobei das erste Montagestück (18) einen am Übergang zwischen dem zylindrischen Teil (19) und dem Verlängerungsstück (26) gebildeten Flansch (24) umfasst.

4. Befestigungsvorrichtung nach Anspruch 1, wobei das erste Montagestück (18) einen Teil (20) mit einem Außengewinde umfasst.

5. Befestigungsvorrichtung nach Anspruch 1, wobei das erste Montagestück (18) einen Keilgriff (23) für ein Werkzeug zum Einschrauben des ersten Montagestücks (18) in den Holm (1) umfasst.

6. Befestigungsvorrichtung nach Anspruch 2, wobei der zylindrische Teil (19) einen Teil (22) mit einem Innengewinde zum Einschrauben des Verlängerungsstücks (26) in den zylindrischen Teil umfasst.

7. Befestigungsvorrichtung nach Anspruch 6, wobei das Verlängerungsstück (26) einen mit einem Gewinde versehenen Federbolzen umfasst.

8. Befestigungsvorrichtung nach Anspruch 1, wobei das zweite Montagestück (31) eine mit einer durchdringenden Rille (36) versehene Scheibe (32) umfasst.

9. Befestigungsvorrichtung nach Anspruch 8, wobei die Scheibe (32) die Form eines Segments eines Zylinders mit einer bogenförmigen Oberfläche (33) und einer ebenen Oberfläche (34) aufweist, und dass sich die Rille (36) im Wesentlichen parallel zu den Seitenteilen (35a, 35b) des Segments erstreckt.

10. Befestigungsvorrichtung nach Anspruch 1, wobei das zweite Montagestück (31) die Verriegelungsvorrichtung (39) und eine gefederte Scheibe (40) umfasst.

11. Befestigungsvorrichtung nach Anspruch 10, wobei die gefederte Scheibe (40) an der Verriegelungsvorrichtung (39) derart befestigt ist, dass eine Drehung ermöglicht wird.

12. Stufe (4), die zum Befestigen mittels einer Befestigungsvorrichtung (17) nach Anspruch 1 ausgebildet ist, **dadurch gekennzeichnet, dass** die Stufe (4) einen Falz (10), der sich in der Seite (4a) der Stufe befindet, die dem Fußboden in Verbindung mit dem Teil (4b) der Stufe zugewandt ist, welcher der Seite zugewandt ist, und ein Loch (13), das sich vom Falz (10) zum Teil (4b) der Stufe hin erstreckt, welcher der Seite zugewandt ist, umfasst, wobei das Loch (13) eine Größe aufweist, die größer als die Verriegelungsvorrichtung (39) ist.

13. Stufe nach Anspruch 12, wobei die Stufe (4) eine Rille (42) in der Seite (4a) umfasst, die dem Fußboden mit einer der Querschnittsform der Kante einer Setzstufe (5) entsprechenden Form zugewandt ist.

14. Verfahren zum Befestigen einer Stufe (4) an einem Holm (1) in einer Holztreppe (2) mit zumindest einer Befestigungsvorrichtung (17) nach Anspruch 1, wobei das Befestigungsverfahren die Befestigungsschritte umfasst:
dass das erste Montagestück (18) am Holm (1) fixiert wird,
dass die Befestigungsvorrichtung (39) und eine gefederte Scheibe (40) des zweiten Montagestücks (31) am ersten Montagestück befestigt werden,
dass die Stufe (4) mit dem Loch (13) das erste Montagestück (18) mit der Verriegelungsvorrichtung (39) und der gefederten Scheibe (40), die daran befestigt sind, übergreift, die in das Loch (13) eingeführt werden, und die Stufe in einer axialen Richtung derart verschoben wird, dass der der Seite zugewandte Teil (4b) der Stufe den Holm (1) berührt,
dass eine Scheibe (32) des zweiten Montagestücks (31) derart gedreht wird,
dass das Verlängerungsstück (26) in einer Rille (36) des zweiten Montagestücks (31) angeordnet wird, und
dass die Verriegelungsvorrichtung (39, 40) durch Verschrauben an der Scheibe (32) fixiert wird.

15. Verfahren zum Befestigen einer Stufe (4) an einem Holm (1) in einer Holztreppe (2) mit zumindest einer Befestigungsvorrichtung (17) nach Anspruch 1, wobei das Befestigungsverfahren die Befestigungsschritte umfasst:
dass das erste Montagestück (18) am Holm (1) fixiert wird,
dass die Verriegelungsvorrichtung (39) und eine gefederte Scheibe (40) des zweiten Montagestücks (31) am ersten Montagestück befestigt werden,
dass die Stufe (4) mit dem Loch (13) das erste Montagestück (18) übergreift, welches in das Loch (13) eingeführt wird, und die Stufe in einer axialen Richtung derart verschoben wird, dass der der Seite zugewandte Teil (4b) der Stufe in einen im Wesentlichen horizontalen Falz (16), der im Holm (1) gebildet ist, mit einer der Querschnittsform der Stufe entsprechenden Form eingeführt wird.
dass eine Scheibe (32) des zweiten Montagestücks (31) derart gedreht wird,
dass das Verlängerungsstück (26) in einer Rille (36) des zweiten Montagestücks (31) angeordnet wird, und
dass die Verriegelungsvorrichtung (39, 40) durch Verschrauben an der Scheibe (32) fixiert wird.

16. Verfahren nach einem der Ansprüche 14-15, zusätzlich umfassend die Befestigungsschritte:
dass ein erster Teil (5a) einer Setzstufe (5), welcher der Seite zugewandt ist, in eine im Wesentlichen vertikale Rille (43), die im Holm (1) gebildet ist, mit einer Form, die der Querschnittsform der Setzstufe entspricht, zu einer Position eingeführt wird, an der eine mittige Linie (7a) der Setzstufe eine mittige Linie (7b) der Stufe passiert hat,
dass ein zweiter Teil (5c) der Setzstufe in eine Rille (42) eingeführt wird, die in der Seite (4a) der Stufe gebildet ist, welche dem Fußboden zugewandt ist.

17. Verfahren nach Anspruch 16, zusätzlich umfassend die Schritte:
dass ein zweiter Holm (1 b) mit einem ersten Montagestück angeordnet wird,
dass der zweite Holm (1 b) in eine Richtung zum zweiten Teil (4c) der Stufe, welcher der Seite mit dem Verlängerungsstück (26) zugewandt ist, in das Loch (13) im zweiten Teil (4c) der Stufe geführt wird, welcher der Seite zugewandt ist,
dass das zweite Montagestück (31) im Falz (10) der Stufe im Verlängerungsstück befestigt wird,
dass die Verriegelungsvorrichtung (39) an der Scheibe (32) festgezogen wird,
dass die Setzstufen (5) in einem bestimmten Abstand vom ersten Holm (1 a) nach außen gezogen und mit ihren zweiten Teilen (5b), die der Seite zugewandt sind, in den Falz im zweiten Holm geführt werden,
dass eine Schraube (45) durch die Setzstufe (5) in die Hinterkante (4d) der Stufe hineingeführt wird, und
dass ein Abdeckpfropfen in den Falz der Stufe hineingesetzt wird, so dass die Befestigungsvorrichtung (17) somit verdeckt wird.

## Revendications

1. Dispositif de montage (17) pour fixer une marche (4) à un limon (1) d'un escalier en bois (2), comprenant une première pièce d'assemblage (18) pourvue de moyens (20) pour sa fixation au limon (1) et d'une portion (26) qui peut être introduite dans un trou (13) dans une partie (4b, 4c) de la marche qui fait face au côté, une deuxième pièce d'assemblage (31) qui peut être montée sur la première pièce d'assemblage (18) et qui peut soutenir la marche (4) d'une manière qui la retient en place, et qui peut être accédée par une feuillure (10) arrangée dans le côté (4a) de la marche qui fait face au sol, et la deuxième pièce d'assemblage (31) comprenant un dispositif de verrouillage (39), et le dispositif de verrouillage (39) présentant des dimensions inférieures au trou (13) si bien que le dispositif de verrouillage (39) est adapté pour passer à travers le trou (13).

2. Dispositif de montage selon la revendication 1, dans lequel la première pièce d'assemblage (18) comprend une partie cylindrique (19) destinée à être fixée au limon (1), avec une pièce de prolongement (26) qui est destinée à être fixée dans la partie cylindrique (19) et qui peut être accédée à travers une feuillure (10) dans la marche (4).

3. Dispositif de montage selon la revendication 2, dans lequel la première pièce d'assemblage (18) comprend une bride (24) formée au niveau de la transition entre la partie cylindrique (19) et la pièce de prolongement (26).

4. Dispositif de montage selon la revendication 1, dans lequel la première pièce d'assemblage (18) comprend une portion (20) avec un filetage extérieur.

5. Dispositif de montage selon la revendication 1, dans lequel la première pièce d'assemblage (18) comprend une prise coincée (23) pour un outil destiné à visser la première pièce d'assemblage (18) dans le limon (1).

6. Dispositif de montage selon la revendication 2, dans lequel la partie cylindrique (19) comprend une portion (22) avec un filetage intérieur pour visser la pièce de prolongement (26) dans la partie cylindrique.

7. Dispositif de montage selon la revendication 6, dans lequel la pièce de prolongement (26) comprend un boulon de tige filetée.

8. Dispositif de montage selon la revendication 1, dans lequel la deuxième pièce d'assemblage (31) comprend un disque (32) pourvu d'une gorge de pénétration (36).

9. Dispositif de montage selon la revendication 8, dans lequel le disque (32) présente la forme d'un segment d'un cylindre avec une surface incurvée (33) et une surface plane (34), et en ce que la gorge (36) s'étend essentiellement parallèlement aux parties latérales (35a, 35b) du segment.

10. Dispositif de montage selon la revendication 1, dans lequel la deuxième pièce d'assemblage (31) comprend le dispositif de verrouillage (39) et une rondelle de serrage à ressort (40).

11. Dispositif de montage selon la revendication 10, dans lequel la rondelle de serrage à ressort (40) est monté au dispositif de verrouillage (39) d'une manière qui permet la rotation.

12. Marche (4) adaptée pour être fixée par un dispositif de montage (17) selon la revendication 1, **caractérisée en ce que** la marche (4) comprend une feuillure (10) située dans le côté (4a) d'une marche qui fait face au sol en association avec la partie (4b) de la marche qui fait face au côté, et un trou (13) qui s'étend de ladite feuillure (10) à la partie (4b) de la marche qui fait face au côté, le trou (13) présentant des dimensions supérieures au dispositif de verrouillage (39).

13. Marche selon la revendication 12, dans laquelle la marche (4) comprend une rainure (42) dans le côté (4a) qui fait face au sol avec une forme qui correspond à la forme en coupe transversale du bord d'une colonne montante (5).

14. Procédé de montage d'une marche (4) à un limon (1) d'un escalier en bois (2) avec au moins un dispositif de montage (17) selon la revendication 1, le procédé de montage comprenant les étapes de montage consistant à:
fixer la première pièce d'assemblage (18) au limon (1),
monter le dispositif de verrouillage (39) et une rondelle de serrage à ressort (40) de la deuxième pièce d'assemblage (31) à la première pièce d'assemblage,
passer la marche (4) avec le trou (13) au-dessus de la première pièce d'assemblage (18) ayant le dispositif de verrouillage (39) et la rondelle de serrage à ressort (40) montés à celle-ci, qui sont introduits dans le trou (13) et la marche est déplacée dans une direction axiale si bien que la partie (4b) de la marche qui fait face au côté entre en contact avec le limon (1),
tourner un disque (32) de la deuxième pièce d'assemblage (31) si bien que la pièce de prolongement (26) est arrangée dans une rainure (36) de la deuxième pièce d'assemblage (31), et
fixer le dispositif de verrouillage (39, 40) au disque (32) par vissage.

15. Procédé de montage d'une marche (4) à un limon (1) d'un escalier en bois (2) avec au moins un dispositif de montage (17) selon la revendication 1, le procédé de montage comprenant les étapes de montage consistant à:
fixer la première pièce d'assemblage (18) au limon (1),
monter le dispositif de verrouillage (39) et la rondelle de serrage à ressort (40) de la deuxième pièce d'assemblage (31) à la première pièce d'assemblage,
passer la marche (4) avec le trou (13) au-dessus de la première pièce d'assemblage (18) qui est introduite dans le trou (13) et la marche est déplacée dans une direction axiale si bien que la partie (4b) de la marche qui fait face au côté est insérée dans une feuillure essentiellement horizontale (16) formée dans le limon (1) avec une forme qui correspond à la forme en coupe transversale de la marche,
tourner un disque (32) de la deuxième pièce d'assemblage (31) si bien que la pièce de prolongement (26) est arrangée dans une rainure (36) de la deuxième pièce d'assemblage (31), et
fixer le dispositif de verrouillage (39, 40) au disque (32) par vissage.

16. Procédé selon l'une quelconque des revendications 14 à 15, comprenant en outre les étapes suivantes consistant à:
introduire une première partie (5a) d'une colonne montante (5) qui fait face au côté dans une rainure essentiellement verticale (43) formée dans le limon (1) avec une forme qui correspond à la forme en coupe transversale d'une colonne montante à une position à laquelle une ligne centrale (7a) de la colonne montante a passé une ligne centrale (7b) de la marche,
introduire une deuxième partie (5c) de la colonne montante dans une rainure (42) formée dans le côté (4a) de la marche qui fait face au sol.

17. Procédé selon la revendication 16, comprenant en outre les étapes consistant à:
arranger un deuxième limon (1 b) avec une première pièce d'assemblage,
manoeuvrer le deuxième limon (1 b) dans une direction vers la deuxième partie (4c) de la marche qui fait face au côté dans le pièce de prolongement (26) dans le trou (13) dans la deuxième partie (4c) de la marche qui fait face au côté,
monter la deuxième pièce d'assemblage (31) dans la feuillure (10) de la marche sur la pièce de prolongement,
serrer le dispositif de verrouillage (39) au disque (32),
tirer les colonnes montantes (5) vers l'extérieur à une certaine distance du premier limon (1a) et les manoeuvrer avec leurs deuxièmes parties (5b) qui font face au côté dans la feuillure dans le deuxième limon,
passer une vis (45) à travers la colonne montante (5) dans le bord arrière (4d) de la marche, et
insérer un bouchon de recouvrement dans la feuillure de la marche si bien que le dispositif de montage (17) est ainsi caché.
